Europäisches Patentamt

European Patent Office

Office européen des brevets

(19)

(11) Numéro de publication : **0 287 945 B1**

## (12) FASCICULE DE BREVET EUROPEEN

(45) Date de publication du fascicule du brevet :
**24.07.91 Bulletin 91/30**

(51) Int. Cl.$^5$ : **H02K 37/12**

(21) Numéro de dépôt : **88105922.4**

(22) Date de dépôt : **14.04.88**

(54) **Dispositif moteur comportant au moins une bobine et procédé de fabrication de cette bobine.**

(30) Priorité : **22.04.87 CH 1549/87**

(43) Date de publication de la demande :
**26.10.88 Bulletin 88/43**

(45) Mention de la délivrance du brevet :
**24.07.91 Bulletin 91/30**

(84) Etats contractants désignés :
**DE FR GB**

(56) Documents cités :
**FR-A- 2 146 527**
**PATENT ABSTRACTS OF JAPAN, vol. 9, no.**
**325 (E-368)[2048], 20 décembre 1985; & JP-**
**A-60 156 253 (YOSHITERU TAKAHASHI) 16-**
**08-1985**

(56) Documents cités :
**PATENT ABSTRACTS OF JAPAN, vol. 10, no.**
**79 (E-391)[2136], 28 mars 1986; & JP-A-60 225**
**449 (SUMITOMO DENKI KOGYO K.K.) 09-**
**11-1985**
**PATENT ABSTRACTS OF JAPAN, vol. 5, no.**
**159 (E-77)[831], 14 octobre 1981; & JP-A-56 90**
**551 (MITSUBISHI DENKI K.K.) 22-07-1981**
**PATENT ABSTRACTS OF JAPAN, vol. 6, no. 21**
**(E-93)[899], 6 février 1982; & JP-A-56 139 066**
**(MATSUSHITA DENKO K.K.) 30-10-1981**

(73) Titulaire : **ETA SA Fabriques d'Ebauches**
**Schild-Rust-Strasse 17**
**CH-2540 Granges (CH)**

(72) Inventeur : **Meister, Pierre-André**
**Haldenstrasse 76**
**CH-2502 Bienne (CH)**

(74) Mandataire : **de Montmollin, Henri et al**
**ICB Ingénieurs Conseils en Brevets SA**
**Passage Max Meuron 6**
**CH-2001 Neuchâtel (CH)**

EP 0 287 945 B1

## Description

La présente invention se rapporte au domaine des moteurs pas à pas miniatures comportant un stator, un rotor aimanté, et au moins une bobine couplée magnétiquement au rotor et reliée à un circuit de commande fournissant à la bobine les impulsions de courant nécessaires pour mettre en mouvement le rotor, le moteur associé au circuit de commande constituant un dispositif moteur.

L'invention concerne de tels dispositifs, particulièrement ceux utilisés dans les pièces d'horlogerie et notamment dans les montres.

Il est utile de rappeler que le moteur le plus utilisé actuellement dans les montres est un moteur pas à pas du type Lavet. Dans ce moteur un rotor aimanté de forme cylindrique crée un champ magnétique radial dans l'entrefer d'un circuit magnétique sur lequel est enroulée une bobine dont les bornes sont connectées à un circuit de commande, généralement un circuit intégré, fournissant des impulsions de courant, chaque impulsion faisant avancer le rotor d'un pas. La bobine est constituée par un fil très fin enroulé sur un tube isolant creux contenant à l'intérieur une partie du circuit magnétique. Le prix du fil, la difficulté de l'enrouler sur le tube et de réaliser des connexions fiables, font que la bobine constitue l'élément le plus coûteux du moteur.

Un autre type de moteur est quelquefois utilisé dans les montres. Dans ce cas le rotor a la forme d'un disque mince aimanté créant dans l'entrefer du circuit magnétique des champs axiaux qui traversent des bobines plates, c'est-à-dire sensiblement planes et de faible épaisseur, disposées parallèlement au rotor. Comme ce type de moteur utilise 6 à 8 bobines en fil de cuivre fin, délicates à réaliser et à connecter entre elles et au circuit de commande, il est encore plus cher à fabriquer que le moteur Lavet. Pour cette raison ce moteur, qui se prête pourtant bien à une construction compacte, n'est guère utilisé en horlogerie. Une réduction importante du prix des bobines a pu être obtenue en les réalisant simultanément sur un circuit imprimé, comme cela est décrit en détail dans le brevet US 4340833. Cette technique, intéressante pour les moteurs industriels, même de petite dimension, est cependant inapplicable au domaine horloger car elle ne permet pas de réaliser des bobines ayant des spires suffisamment fines pour assurer au moteur un bon rendement.

Il apparaît clairement de ces exemples que les moteurs pas à pas actuellement utilisés dans les montres sont chers et manquent de fiabilité à cause, respectivement, du prix des bobines et de la difficulté de les relier au circuit de commande.

La présente invention a pour but de pallier ces inconvénients en présentant un dispositif moteur comprenant :

— un stator ;

— un rotor aimanté en forme de disque plan, monté pivotant dans le stator et comportant au moins une paire de pôles magnétiques produisant un champ sensiblement parallèle à l'axe de rotation du rotor dans un entrefer délimité par le stator et le rotor ; et

— au moins une bobine sensiblement plane de faible épaisseur, cette bobine étant placée dans l'entrefer, perpendiculairement à l'axe de rotation, de manière à intercepter le flux créé par le champ,

qui est particulièrement remarquable en ce que la bobine est disposée sur une face d'une plaquette de semiconducteur dans laquelle est implanté un circuit de commande, ce circuit étant directement connecté à la bobine pour lui fournir des impulsions motrices.

Le dispositif selon l'invention constitue une amélioration de l'ensemble que forment le moteur utilisant des bobines plates et le circuit de commande qui lui est associé.

Un avantage de l'invention résulte de ce que les bobines et le circuit de commande forment un module unique, de faible encombrement, pouvant être produit en grande série à un prix avantageux.

Un autre avantage provient du fait que le module simplifie le montage du dispositif tout en améliorant sa fiabilité. Encore un autre avantage est que le module permet de réduire les dimensions du dispositif moteur.

D'autres caractéristiques et avantages du dispositif moteur selon l'invention ressortiront de la description qui va suivre, faite en regard du dessin annexé et donnant, à titre explicatif mais nullement limitatif, un exemple de réalisation d'un tel dispositif. Sur ce dessin, où les mêmes références se rapportent à des éléments analogues :

— la figure 1a est une vue en coupe d'un moteur, connu de l'art antérieur, comportant un rotor aimanté en forme de disque mince et des bobines plates ;

— la figure 1b représente, dans une vue en plan, le rotor du moteur de la figure 1a montrant la disposition des pôles magnétiques ;

— la figure 1c représente, dans une vue en plan, les bobines du moteur de la figure 1a et les connexions de ces bobines à un circuit de commande ;

— la figure 2 est une vue en plan d'un module selon l'invention formé d'une plaquette de silicium qui porte sur une face des bobines et dans laquelle est implanté un circuit intégré de commande dont la sortie est connectée aux bornes des bobines ;

— la figure 3 est une vue en plan d'une partie de la plaquette représentée sur la figure 2 montrant une bobine et sa liaison avec le circuit de commande ; et

— la figure 4 montre, dans une vue en coupe, un mode de réalisation avantageux du dispositif moteur selon l'invention, ce dispositif étant composé d'un moteur et d'un circuit de commande.

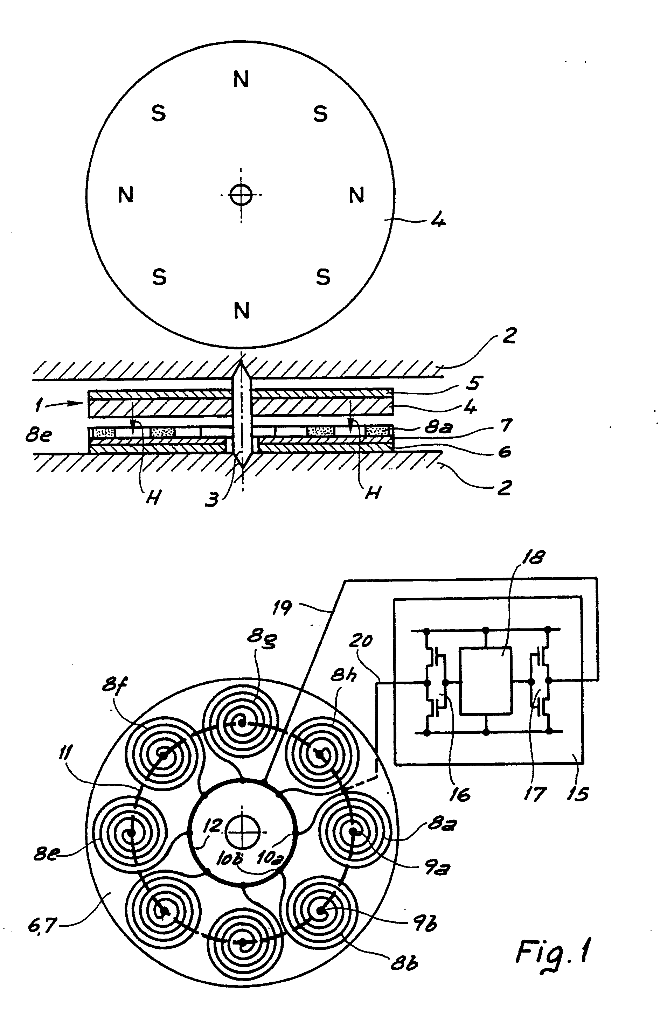

Un moteur, connu de l'art antérieur et comportant des bobines plates, est représenté en coupe sur la figure 1a. Ce moteur comprend un rotor 1, un stator 2, et un arbre 3 solidaire du rotor et pivotant dans le stator. Le stator peut avantageusement être constitué, dans le cas d'un moteur de montre, par des éléments de la platine du mouvement. Le rotor est composé, de son côté, d'un disque circulaire aimanté 4, disposé près d'une des extrémités de l'arbre 3, et d'une première plaque circulaire 5 en matériau magnétique doux, cette plaque étant fixée sur la face du disque 4 la plus proche du stator 2. Le moteur comprend en outre, disposées sur le stator 2, une deuxième plaque circulaire 6, de même forme que la plaque 5, une feuille isolante 7, et 8 bobines plates 8a, 8b... 8h. La plaque 6 est fixée sur la partie du stator se trouvant en regard de la face libre du disque en ferrite 4, l'espace entre la plaque 6 et le rotor 1 définissant un entrefer. Enfin les bobines, référencées 8a, 8b... 8h, sont disposées dans l'entrefer sur la plaque 6, la feuille 7 étant interposée entre la plaque 6 et les bobines pour assurer leur isolation.

La figure 1b montre, dans une vue en plan, le disque 4 et la disposition des pôles magnétiques, le disque pouvant avantageusement être réalisé en ferrite ou en samarium-cobalt. Dans l'exemple représenté, le disque 4 comporte 4 paires de pôles magnétiques disposés au voisinage de la périphérie du rotor. Ces pôles créent des champs magnétiques H dans l'entrefer séparant le rotor 1 du stator 2, à l'endroit où se trouvent les bobines 8a... 8h. Dans l'entrefer, les champs H ont tous sensiblement la même direction, parallèle à l'axe de rotation du rotor, mais leur sens est alterné. En dehors de l'entrefer, les champs sont canalisés d'un pôle magnétique au pôle adjacent par les plaques 5 et 6 qui présentent, à cet effet, une perméabilité magnétique élevée. Si la partie du stator 2 se trouvant au voisinage de bobines était réalisée en un matériau magnétique doux, la plaque 6 serait bien entendu inutile.

La forme et la disposition des bobines 8a... 8h sont représentées en plan sur la figure 1c. Ces bobines, semblables les unes aux autres, se présentant sous la forme de disques circulaires plans ayant une épaisseur faible par rapport à leur diamètre extérieur, sont disposées de manière à intercepter le maximum du flux créé par les champs magnétiques H dans l'entrefer. Chaque bobine, réalisée avec du fil de cuivre très mince, comporte une borne d'entrée et une borne de sorties, ces bornes étant référencées respectivement 9a et 10a pour la bobine 8a, 9b et 10b pour la bobine 8b, etc. Enfin, dans l'exemple représenté, d'une part, les spires d'une bobine sont enroulées dans un sens et les spires d'une bobine adjacente dans le sens inverse et, d'autre part, toutes les bornes d'entrée des bobines sont reliées ensemble par un conducteur 11, et toutes les bornes de sortie par un conducteur 12. Dans ces conditions, des courants de même sens circulent dans les parties voisines des spires de deux bobines adjacentes en réponse à une tension appliquée entre les conducteurs 11 et 12.

Sur la figure 1c est encore représenté un circuit de commande 15. Ce circuit, réalisé généralement sous la forme d'un circuit intégré implanté dans une plaquette de silicium, est destiné à fournir aux bobines des impulsions motrices de courant pour faire tourner le rotor. Le circuit 15 comprend deux inverseurs, référencés 16 et 17, et un circuit logique 18. Les sorties des inverseurs sont connectées respectivement aux conducteurs 11 et 12, par des fils référencés 19 et 20, alors que les entrées de ces inverseurs sont reliées directement au circuit 18.

Si le dispositif moteur est destiné à équiper une montre, le circuit 18 comprend essentiellement un circuit base de temps stabilisé en fréquence par un résonateur à quartz, un diviseur de fréquence, et un circuit de mise en forme des signaux attaquant les inverseurs 16 et 17, ces inverseurs fournissant alors aux bobines du moteur des impulsions motrices polarisées. Le circuit 18 comporte encore au moins une borne d'entrée permettant de mettre la montre à l'heure au moyen de signaux fournis par au moins un organe de commande extérieur. Le circuit 15 est enfin alimenté en énergie par une pile disposée à l'intérieur de la boîte de montre. Ces parties de circuit et ces composants, étant connus en soi, ne sont pas représentés sur la figure 1c et ils ne seront pas décrits non plus.

Le dispositif moteur qui vient d'être décrit peut se présenter sous des formes légèrement différentes mais connues. En particulier il y a intérêt, pour augmenter la longueur de la partie active des spires et améliorer le rendement du moteur, à donner aux bobines 8a ... 8h une forme triangulaire, semblable à celle représentée sur la figure 5 du document cité. D'autre part les bobines, au lieu d'être reliées en parallèle, pourraient être connectées en série. Enfin chaque bobine pourrait aussi être reliée directement à une paire d'inverseurs, le circuit 15 comportant alors autant de paires d'inverseurs, semblables aux inverseurs 16 et 17, qu'il y a de bobines.

La présente invention se propose, lorsque le circuit de commande 15 est un circuit intégré, de simplifier et de rendre plus fiable un tel dispositif moteur en regroupant, en un module unique, le circuit, les bobines et les connexions entre le circuit et les bobines.

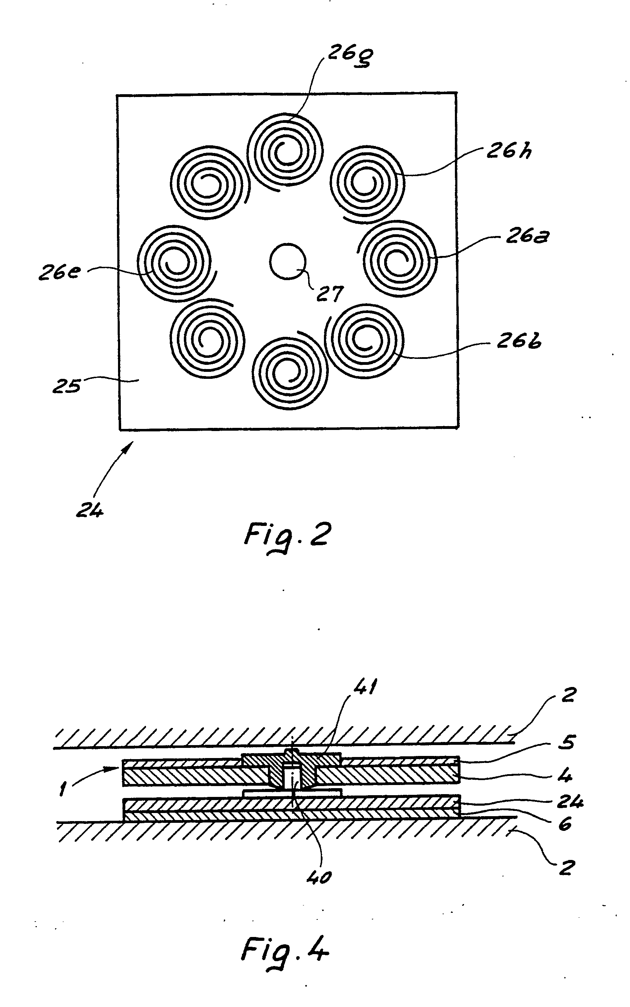

Un tel module, référencé 24, est représenté en plan sur la figure 2. Il comprend une plaquette de silicium 25, appelée aussi substrat semiconducteur, un circuit intégré de commande non représenté, réalisé selon la technologie CMOS et implanté dans le substrat, et huit bobines, références 26a, 26b,... 26g, 26h, disposées sur une face de la plaquette au centre de laquelle est pratiqué un trou 27 pour laisser passer l'arbre 3 du rotor. Les bobines 26a... 26h, directement connectées au circuit de commande, ont la même fonction que les bobines 8a.... 8h précédemment décrites.

Dans le cas d'un dispositif moteur pour montre, la plaquette 25 est de forme carrée et mesure typiquement 4 mm de côté et 0,2 mm d'épaisseur, alors que les bobines 26a... 26h ont un diamètre extérieur d'environ 1 mm et une épaisseur négligeable. Dans ces conditions, le diamètre du rotor 1 est d'environ 5 mm. D'autre part, le disque 4 et les plaques 5 et 6 ont respectivement environ 0,4 mm et 0,3 mm d'épaisseur. La hauteur totale du moteur, en admettant qu'il existe un espace de 0,1 mm entre le disque 4 et les bobines 26a... 26h, devient alors égale à 1,3 mm.

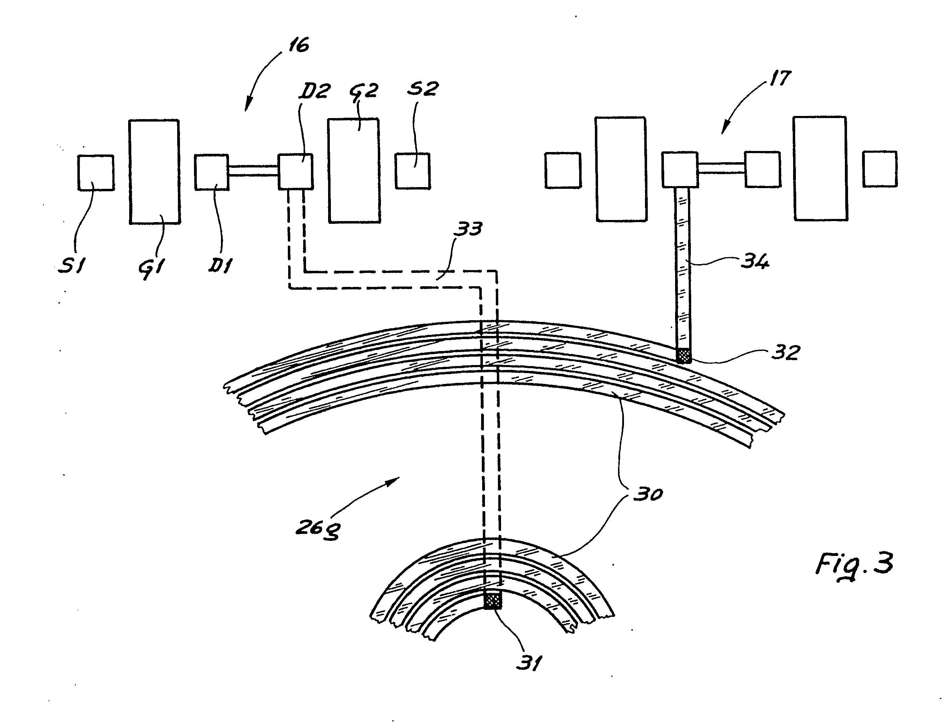

Une partie de la plaquette 25 est représentée dans une vue en plan agrandie sur la figure 3, montrant la bobine 26g, les deux inverseurs 16 et 17 du circuit intégré de commande 15, et les connexions entre les extrémités de la bobine et les sorties des inverseurs.

La bobine 26g comprend environ 150 spires. Elle est formée par un conducteur 30 en aluminium, enroulé en spirale sur une seule couche, la distance entre deux spires étant de l'ordre du micromètre. Le conducteur 30, qui présente une borne intérieure 31 et une borne extérieure 32, a une section carrée de 2 micromètres de côté et une résistance entre ces bornes, correspondant à la résistance de la bobine, de l'ordre de 2'000 ohms. La bobine 26g a, dans l'exemple représenté, une forme circulaire mais, bien entendu, sa forme pourrait être triangulaire afin d'améliorer le rendement du moteur.

L'inverseur 16, représenté sur la figure 3, est formé de deux transistors complémentaires CMOS, chaque transistor comportant une source, une grille et un drain, notés respectivement $S_1$, $G_1$, et $D_1$ pour le premier transistor et $S_2$, $G_2$ et $D_2$ pour le deuxième. Les drains $D_1$ et $D_2$ sont reliés ensemble et ils forment la sortie de l'inverseur 16. Cette sortie est connectée à la borne 31 par un conducteur électrique 33. L'inverseur 17 a une structure identique à celle de l'inverseur 16 et sa sortie est reliée à la borne 32 par un conducteur électrique 34. Les autres bobines peuvent être connectées en parallèle sur la bobine 26g.

Cependant, afin de diminuer la longueur des conducteurs de liaison, il y a intérêt à relier chaque bobine directement à une paire d'inverseurs identiques aux inverseurs 16 et 17. Le reste du circuit de commande et des connexions n'a pas été représenté. Comme ces éléments occupent une place relativement restreinte, ils peuvent être implantés, par exemple, dans un des coins de la plaquette 25.

Les bobines 26a... 26h peuvent avantageusement être réalisées sur la plaquette de silicium 25 par le même procédé, et en même temps, que celui qui permet de fabriquer dans cette plaquette le circuit intégré de commande, et cela sans nécessiter d'étape de fabrication supplémentaire.

Pour comprendre comment les bobines peuvent être obtenues, il faut rappeler auparavant que la fabrication d'un circuit intégré MOS comporte plusieurs étapes, les plus importantes consistant :

— à diffuser dans la plaquette de silicium à travers des masques successifs des impuretés en des endroits bien définis pour constituer les différents composants actifs et passifs du circuit ;

— à recouvrir la surface du circuit par une couche isolante d'oxyde de silicium ;

— à pratiquer dans la couche d'oxyde des ouvertures aux endroits où le circuit présente des bornes de connexion ; enfin

— à déposer à travers un masque de métallisation, par un processus de métallisation sous vide, des pistes conductrices en aluminium reliant sélectivement entre elles les bornes de connexion.

Si le masque de métallisation comporte en outre le dessin des spires des bobines et celui de leurs liaisons avec le circuit, il est évident que les bobines et les connexions entre les bobines et le circuit seront obtenues en même temps, et par le même processus, que les autres métallisations. La finesse de définition des conducteurs que permet le processus de métallisation est par ailleurs compatible avec les faibles dimensions des bobines et des conducteurs formant les spires, indiquées plus haut, nécessaires pour obtenir un bon rendement du moteur.

La technologie des circuits intégrés MOS permet donc de réaliser, sans étape de fabrication supplémentaire, le module 24 regroupant, sur la même plaquette de silicium, le circuit de commande, les bobines et les liaisons électriques des bobines au circuit. Ces liaisons peuvent être obtenues soit par une métallisation, lorsqu'il n'y a pas de croisement avec une autre métallisation, comme par exemple pour le conducteur 34, soit au moyen d'un canal de conduction diffusé, du type p si le substrat est du type n, lorsqu'il y a croisement, comme c'est le cas pour le conducteur 33 qui doit passer sous la bobine 26g.

Ce module permet de simplifier la construction du dispositif moteur en diminuant le nombre des composants. Une réalisation avantageuse est représentée sur la figure 4 où les références 1, 2, 4, 5 et 6 désignent les mêmes éléments que ceux de la figure 1a, à savoir, respectivement, le rotor, le stator, le disque de ferrite, et les deux plaques en matériau magnétique doux. Le module, référencé 24, est fixé directement sur la plaque 6, à la place des bobines 8a... 8h de la figure 1a, de manière que sa face portant les bobines 26a... 26h se trouve en regard du rotor. En son centre, le module supporte un tenon circulaire 40 qui, en venant s'engager dans un palier 41 fixé au centre du rotor 1, sert à ce dernier d'arbre de rotation. Avec cette disposition le module 24 n'a pas besoin d'être percé en son centre, opération délicate qui était rendue nécessaire dans la réalisation représentée sur la figure 1a pour laisser passer l'arbre 3.

## Revendications

1. Dispositif moteur comprenant :
— un stator (2) ;
— un rotor (1) aimanté en forme de disque plan, monté pivotant dans le stator et comportant au moins une paire de pôles magnétiques produisant un champ (H) sensiblement parallèle à l'axe de rotation du rotor dans un entrefer délimité par le stator et le rotor ; et
— au moins une bobine (26a) sensiblement plane, ladite bobine étant placée dans l'entrefer, perpendiculairement à l'axe de rotation, de manière à intercepter le flux créé par le champ, caractérisé en ce que ladite bobine (26a) est disposée sur une face d'une plaquette (25) de semiconducteur dans laquelle est implanté un circuit intégré de commande, ledit circuit étant directement connecté à la bobine pour lui fournir des impulsions motrices.

2. Dispositif moteur selon la revendication 1, caractérisé en ce que ladite bobine (26a) est formée d'une seule couche de spires.

3. Dispositif moteur selon la revendication 1 ou 2, caractérisé en ce que ladite plaquette (25) délimite un orifice central (27) par lequel passe un arbre (3) destiné à supporter le rotor (1) en prenant appui sur le stator (2).

4. Dispositif moteur selon la revendication 1, 2 ou 3, caractérisé en ce que ladite plaquette (25) supporte en outre un tenon (40) servant d'arbre de pivotement au rotor (1)

5. Procédé de fabrication de la bobine du dispositif moteur selon la revendication 1, caractérisé en ce qu'il consiste à déposer sur une face de la plaquette (25) de semiconducteur, par un processus de métallisation, un conducteur (30, 34) formant ladite bobine (26a) et sa liaison électrique audit circuit.

6. Procédé de fabrication selon la revendication 5, caractérisé en ce qu'il consiste à déposer ledit conducteur (30, 34) en même temps et par le même processus de métallisation que celui qui sert à interconnecter les composants du circuit implanté dans ladite plaquette (25).

## Patentansprüche

1. Motoranordnung, umfassend :
— einen Stator (2),

— einen drehbeweglich im Stator montierten magnetisierten Rotor (1) in Form einer ebenen Scheibe mit mindestens einem Paar von Magnetpolen, die ein zur Drehachse des Rotors im wesentlichen paralleles Feld (H) in einem von dem Stator und dem Rotor begrenzten Luftspalt erzeugen, und
— mindestens eine im wesentlichen ebene Spule (26a), die im Luftspalt senkrecht zur Drehachse derart angeordnet ist, daß sie von dem durch das Feld erzeugten Fluß durchsetzt wird, dadurch gekennzeichnet,
daß die Spule (26a) auf einer Seite eines Halbleiterplättchens (25) angeordnet ist, in dem ein integrierter Steuerschaltkreis implantiert ist, welcher direkt mit der Spule verbunden ist, um ihr Antriebsimpulse zuzuführen.

2. Motoranordnung nach Anspruch 1, dadurch gekennzeichnet, daß die Spule (26a) von einer einzigen Lage von Windungen gebildet ist.

3. Motoranordnung nach Anspruch 1 oder 2, dadurch gekennzeichnet, daß das Plättchen (25) eine zentrale Öffnung (27) begrenzt, durch die sich eine Welle (3) erstreckt, bestimmt zum Abstützen des Rotors (1) unter Anlage an dem Stator (2).

4. Motoranordnung nach Anspruch 1, 2 oder 3, dadurch gekennzeichnet, daß das Plättchen (25) ferner einen als Drehwelle des Rotors (1) dienenden Zapfen (40) trägt.

5. Verfahren zum Herstellen der Spule der Motoranordnung nach Anspruch 1, dadurch gekennzeichnet, daß auf einer Seite des Halbleiterplättchens (25) durch einen Metallisierungsprozeß ein Leiter (30, 34) aufgebracht wird, der die Spule (26a) und ihre elektrische Verbindung zu dem Schaltkreis bildet.

6. Herstellungsverfahren nach Anspruch 5, dadurch gekennzeichnet, daß der Leiter (30, 34) gleichzeitig und durch denselben Metallisierungsprozeß aufgebracht wird wie derjenige, der dazu dient, die Komponenten des in das Plättchen implantierten Schaltkreises miteinander zu verbinden.

## Claims

1. Motor arrangement comprising :
— a stator (2) ;
— a rotor (1) having a substantially flat magnetized disk-like portion rotatably mounted in the stator and including at least one pair of magnetic poles to produce a field (H) that is substantially parallel to the axis of rotation of the rotor in an air gap defined by the stator and the rotor ; and
— at least one substantially flat coil (26a), said coil being placed in the air gap at right angles to said axis of rotation, such as to intercept the flux created by the field ;
characterized in that said coil (26a) is arranged on one side of a semi-conductor chip (25) in which is implanted an integrated control circuit, said circuit being directly connected to said coil to supply it with drive pulses.

2. Motor arrangement according to claim 1, characterized in that said coil (26a) is formed by a single layer of turns.

3. Motor arrangement according to claim 1 or 2, characterized in that said chip (25) has a central opening (27) through which extends a shaft (3) intended to support said rotor (1) and bearing on said stator (2).

4. Motor arrangement according to claim 1, 2 or 3, characterized in that said chip (25) further carries a stud (40) acting as a shaft about which said rotor (1) may rotate.

5. Method of making a coil for a motor arrangement according to claim 1, characterized in that it comprises depositing, by a metallization process, on one side of said semi-conductor chip (25) a conductor (30, 34) to form said coil (26a) and its electrical connection to said circuit.

6. Method according to claim 5, characterized in that it comprises depositing said conductor (30, 34) at the same time and by the same metallization process as the one which serves to interconnect the components of the circuit implanted in said chip (25).

Fig.1

Fig.2

Fig.4

Fig. 3